# EUROPEAN PATENT APPLICATION

(11) **EP 4 418 059 A1**
(43) Date of publication of application: **21.08.2024**
(21) Application number: 23156566.4
(22) Date of filing: 14.02.2023
(51) Int. Cl.: G05B 19/418, G05B 13/02

(54) **DETERMINING A CONDITION LEVEL VALUE**

(71) Applicant: Siemens Aktiengesellschaft, 80333 München (DE)
(72) Inventor: The designation of the inventor has not yet been filed
(74) Representative: Siemens Patent Attorneys

(57) **Abstract**

A method for determining a condition level value (12) for a production process (14) a component (18), comprising the steps of:
- capturing a first parameter (28a, 28b), wherein the first parameter (28a, 28b) is a value describing a parameter of a production machine (30a, 30b);
- capturing a second parameter (32a, 32b) of the component (18), wherein the second parameter (32a, 32b) is a value describing a parameter of the component (18);
- capturing a third parameter (34) of the surroundings (36), wherein the third parameter (24) is a value describing the surroundings (36); and
- determining the condition level value (12) depending on at least the first parameter (28a, 28b), the second parameter (32a, 32b) and the third parameter (34).
Furthermore, the invention relates to a computer program product, a computer-readable storage medium as well as a monitoring system (10).

## Description

The invention relates to a method for determining a condition level value for a production process of a production line for at least one component by a monitoring system according to the independent claim 1. Furthermore, the invention relates to a corresponding computer program product, a computer-readable storage medium as well as to a corresponding monitoring system.

Independent of the grammatical term usage, individuals with male, female or other gender identities are included within the term.

The challenges currently being discussed in the area of securing digitized manufacturing against attacks are already being addressed by higher-level initiatives. The security required in the Charter of Trust can be significantly improved in an ongoing production process by implementing concepts such as the Chain of Trust, but there the influence on production integrity/quality by components of inferior quality or by defective parts or even by targeted manipulation of production equipment (software/hardware) cannot be detected. To safeguard against such cases, anomalies caused by manipulation or unexpected events in general should be detected as early as possible so that suitable countermeasures can be taken. In parallel to safeguarding manufacturing, modern production is required to guarantee the highest achievable productivity in order to be able to operate competitively worldwide. Typically, production lines are set up by coupling manufacturing and testing with the maximum possible cycle time. This is based on minimum requirements for the quality of input materials, components, and processes. In the case of variation to the negative, this has an immediate effect on product quality; expected defects are detected by the implemented test procedures and countermeasures can be initiated. In the case of variation towards the positive, i.e., with optimal boundary conditions, an increase in productivity, e.g., by reducing the number of test steps run through, has not been possible up to now. However, there is a great potential for increasing the efficiency of manufacturing by omitting test steps while maintaining a proven high manufacturing quality. Of course, it is not possible to spontaneously omit testing; in a production line with in-line testing, this would also make it difficult to achieve a productivity gain. However, if such dynamic test concepts or evaluation parameters are implemented at an early stage, it may well be possible to realize production with optimized efficiency while maintaining consistently high product quality. Implementation on the basis of classic MES (manufacturing execution system) systems is only possible with difficulty, since only the defined minimum requirements are checked here and additional data sources of freely available information are not "tapped".

The system architecture in manufacturing electronics production is currently largely characterized by the hierarchical system of the manufacturing pyramid. This structure is intended to reduce the complexity of industrial manufacturing by dividing the processes into individual levels that build on each other. This is intended to create a system that is easy to understand and keep track of. The pyramid consists of separate hierarchical levels, with the respective levels characterized by different systems. A Company level: ERP (Enterprise Resource Planning); an Operating level: MES (Manufacturing Execution System); a Process control level: SCADA (Supervisory Control and Data Acquisition); a Control level: PLC (programmable logic controller); and a Field level: Sensors / actuators.

On the respective automation levels, various specific techniques for data transmission and processing are established for communication within the levels.

Nevertheless, the challenge in this pyramid structure is that the individual levels are not networked with each other and act autonomously / isolated according to their task. Data availability is not compatible across the boundaries. This hierarchy shows significant disadvantages in terms of flexibility and influence possibilities due to disturbance variables occurring from the outside. The collection of raw data from the source systems into a central data pot should not be a major technical challenge. The difficulty, on the other hand, lies in the correct interpretation of the data, as this is usually not standardized. Even with structured data from ERP systems of the same manufacturer, this data standardization can be the main effort driver for setting up consistent data or process data mining.

It is an object of the invention to provide a method, a computer program product, a computer-readable storage medium as well as a monitoring system, by which an improved monitoring of a component during a production process can be realized.

This object is solved by a method, a corresponding computer program product, a corresponding computer-readable storage medium as well as a corresponding monitoring system.

One aspect of the invention relates to a method for determining a condition level value for a production process of a production line for at least one component by a monitoring system. A first parameter of the production process is captured by a first sensor device of the monitoring system, wherein the first sensor device is arranged at at least one production machine of the production line, and wherein the first parameter is a value describing a parameter of the production machine. A second parameter of the component during the production process is captured by a second sensor device of the monitoring system, wherein the second parameter is a value describing a parameter of the component. A third parameter of the surroundings of the component and/or the production machine during the production process is captured by a third sensor device of the monitoring system, wherein the third parameter is a value describing the surroundings. The condition level value is determined depending on at least the first parameter, the second parameter, and the third parameter by an electronic computing device of the monitoring system.

Therefore, a standardized assessment value that can be derived from different data sources by, for example, an artificial intelligent algorithm to evaluate, in particular, a distributed manufacturing environment in terms of resilience and robustness is provided.

In particular, based on the real, locally available data from, for example, the production machine, the surroundings/environment and the component/product itself in the environment of a in particular distributed manufacturing an unambitious quality characterization becomes possible by introducing the condition level value of the component to be manufactured, which may predict critical states, preventively avoids/reduces failures/downtimes or allows a quality-oriented continuous manufacturing by adaption and feedback of adjustable parameters.

In order to realize this, an appropriately modularly expandable real-time capable sensor mesh is provided, which processes and evaluates the state of the individual areas/machines of the in particular distributed electronic production machines and converts them together with freely available environmental data into a state image.

The condition level may describe, for example, four different levels. For example, level 1 is an optimized production, level 2 may be a slightly disturbed production, level 3 a significantly disturbed production, and level 4 a damaged production. In level 1, an optimization of the component/product may be provided. In level 2, an ensuring of the component quality and in particular countermeasures for getting back to the optimized production is performed. In level 3, an early detection of a possible damage as well as a determination of possible countermeasures is performed. In level 4, a controlled intervention of the production process as well as dissolving of the damage may be performed.

In particular the method is provided for a distributed manufacturing process. For example, the component may be produced by a plurality of different production machines, which are located at different places of an industrial area or the different machines may be located at different industrial areas.

According to an embodiment, the condition level value is determined by an artificial intelligence of the electronic computing device. In particular, the artificial intelligence is configured as a federated learning algorithm. In particular, this has the advantage that if the production line is a distributed production line/a distributed production process, the federated learning algorithm enables multiple actors to build a common, robust machine-learning model without sharing data, thus allowing to address critical issues such as data privacy, data security, data access rights and access to heterogeneous data. In particular, the federated learning, which is also known as collaborative learning, is a machine-learning technique that trains an algorithm across multiple decentralized edge devices or servers holding local data samples without exchanging them. In particular, therefore, each production location/production machine may comprise an individual electronic computing device on which the federate learning is processed, at least in part.

In another embodiment, the production process is a distributed production process. Furthermore, in each production step of the distributed production process, at least the first parameter and/or the second parameter and/or the third parameter is captured. Furthermore, each of the first parameter and/or each of the second parameter and/or each of the third parameter are aggregated to the condition level value. Therefore, an individual condition level for a distributed manufacturing process is provided. This is an unambitious quality characterization of the product/component to be manufactured, which may predict critical states, preventively avoids/reduces failures, downtimes or allows a quality-oriented continuous manufacturing by adaption and feedback of the adjustable parameters. As already mentioned, the evaluation of the state may be, for example, performed by the artificial intelligent method of the federated learning, which allows to derive a current "situation picture". From this comparison and the correlation of the elected data, the condition level value, which may be the quality parameter, is developed, which is intended to ensure both productivity and, for example, resilience in one. This condition level value is designed to be independent of the existent digital manufacturing infrastructure and thus serves as an independent data source for manufacturing optimization decision.

According to another embodiment, the component is an electronic
component/assembly/product/module/packaging/printed circuit board. In particular, by electronic
component/assembly/product/module/packaging/printed circuit board, it is crucial that the production process is monitored in a highly efficient way in order to produce a component with a high quality.

According to another embodiment, a machine temperature and/or a machine current and/or a machine voltage are captured as the first parameter. Furthermore, as the second parameter, a component temperature and/or an acceleration of the component are captured. Furthermore, as the third parameter, a temperature of the surroundings and/or a humidity in the surroundings and/or a production noise in the surroundings and/or a light value in the surroundings and/or a magnetic field value in the surroundings and/or an electric field value in the surroundings are captured. Therefore, in order to realize the efficient approach, an appropriately modularly and expendable real-time capable sensor mesh is developed which processes and evaluates the state of the individual areas/machines of the distributed electronics production and converts them together with freely available environmental data, for example temperature, humidity, acceleration or operating noise, but also alternative values such as the ultra-violet radiation (light value), air quality, electric fields and B-fields into the state image. Therefore, a big amount of different parameters of the production machine, the component as well as the surroundings are measured. Therefore, the condition level value is determined in a highly detailed manner. Therefore, a precise monitoring of the components is provided.

According to another embodiment, depending on the determined condition level value, a productivity of the production process and/or resilience of the production process is determined. In particular, the condition level value may be provided as a numerical value, wherein according to the numerical value four levels may be provided in order to determine a state of the productivity of the production process and/or a resilience of the production process. Depending on the numerical value, the current production is assigned to the, for example, four levels. In particular, with the condition level value, a resilience strategy can be implemented, and manufacturing environments can be optimally controlled under all operating conditions.

In another embodiment, depending on the determined condition level value, a countermeasure for affecting the condition level value is determined and/or a device for performing the countermeasure is controlled. For example, if the temperature of the component and/or the temperature of the surroundings is too high, the electronic computing device, which may be in particular a central electronic computing device, may determine a lowering of the temperature as a countermeasure. Therefore, for example, a climate device may be controlled by the electronic computing device in order to lower/reduce the temperature for the component/surroundings. It is obvious for a person skilled in the art that also other countermeasures may be determined, and other countermeasure devices may be controlled.

In particular, the method is a computer implemented method. Therefore, another aspect of the invention relates to a computer program product comprising program code means for performing a method according to preceding aspect.

Another aspect of the invention relates to a computer-readable storage medium comprising at least the computer program product according to the preceding aspect.

A still further aspect of the invention relates to a monitoring system for determining a condition level value for a production process of a production line for at least one component, comprising at least a first sensor device, a second sensor device, a third sensor device, and an electronic computing device, wherein the monitoring system is configured for performing a method according to any of the preceding claims. In particular, the method is performed by the monitoring system.

The electronic computing device may comprise processors, circuits, in particular integrated circuits, and further electronic means for performing the method.

Advantageous forms of configuration of the method are to be regarded as advantageous forms of the computer program product, the computer-readable storage medium as well as the monitoring system. The monitoring system therefore comprises means for performing the method.

Independent of the grammatical term usage, individuals with male, female or other gender identities are included within the term.

Further features of the invention result from the claims, the figures, and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore:
- FIG 1: shows a schematic block diagram according to an embodiment of a monitoring system; and
- FIG 2: shows a schematic flow chart according to an embodiment of the method.

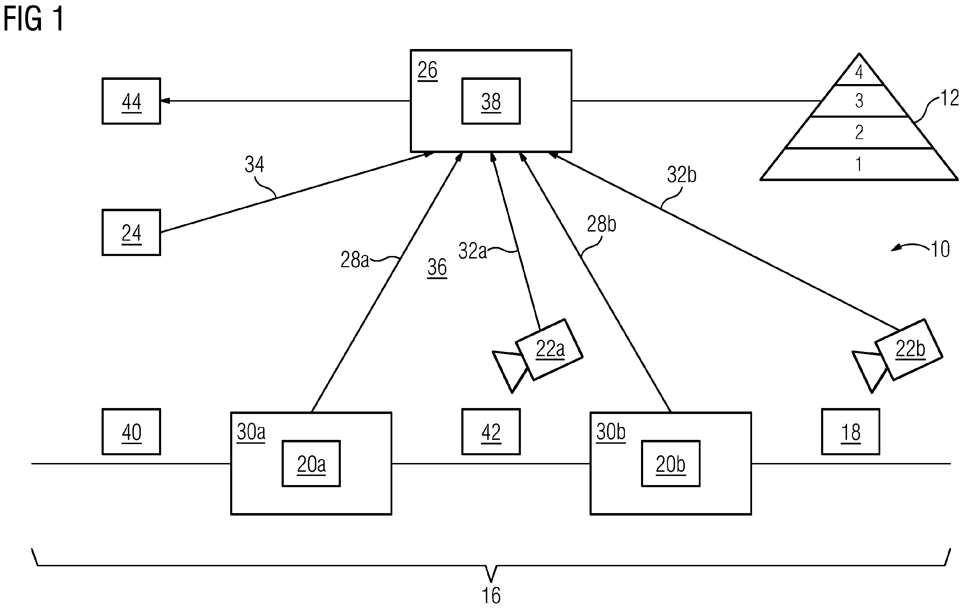

FIG 1 shows a schematic block diagram according to an embodiment of a monitoring system 10 for determining a condition level value 12 for a production process 14 of a production line 16 for at least one component 18. The monitoring system 10 therefore comprises at least a first sensor device 20a, 20b, a second sensor device 22a, 22b as well as a third sensor device 24. Furthermore, the monitoring system 10 comprises at least one electronic computing device 26.

According to an embodiment of the method, a first parameter 28a, 28b of the production process 14 is captured by the first sensor device 20a, 220b, wherein the first sensor device 20a, 20b is arranged at least at one production machine 30a, 30b of the production line 16, and wherein the first parameter 28a, 28b is a value describing a parameter of the production machine 30a, 30b.

A second parameter 32a, 32b of the component 18 during the production process 14 is captured by the second sensor device 22a, 22b, wherein the second parameter 32a, 32b is a value describing a parameter of the component 18. A third parameter 34 of the surroundings 36 of the component 18 and/or the production machine 30a, 30b during the production process 14 is captured by the third sensor device 24, wherein the third parameter 34 is a value describing the surroundings 36.

The condition level value 12 is determined depending on the first parameter 28a, 28b, the second parameter 32a, 32b, and the third parameter 34 by the electronic computing device 26.

In particular, the condition level value 12 is determined by an artificial intelligence 38 of the electronic computing device 26. In particular, the artificial intelligence 38 is configured as a federated learning algorithm. Therefore, in particular the production process 14 may be a distributed production process, wherein in each production step of the distributed production process 14 at least the first parameter 28a, 28b and/or the second parameter 32a, 32b and/or the third parameter 34 is captured.

Therefore, FIG 1 shows that, for example, a first first sensor device 20a captures a first first parameter 28a at a first production machine 30a. A second first sensor device 20b from a second production machine 30b captures a second first parameter 28b. With a first second sensor device 22a, a first second parameter value 32a is captured and with a second second sensor device 22b, a second second parameter 32b is captured.

According to the shown embodiment, a first intermediate product or a raw product 40 goes into the first production machine 30a and an intermediate product 42 goes from the first production machine 30a to the second production machine 30b. After the second production machine 30b, the component 18 is produced depending on at least the raw product 40 and the intermediate product 42. The first second capturing device 22a may, for example, capture the intermediate product 42 and the second sensor device 22b may, for example, capture the component 18.

Furthermore, FIG 1 shows that, for example, the condition level value 12 may be analyzed, for example four different levels for the condition level value 12 are provided. A first level may, for example, describing an optimized production of the component 18, the second level may describe a slightly disturbed production, the third level may describe a significantly disturbed production, and the fourth level may describe a damaged production.

FIG 1 further shows that, for example, according to an embodiment, depending on the determined condition level value 12, a countermeasure for affecting the condition level 12 is determined by the electronic computing device 26, and/or a device 44 for performing the countermeasure is controlled by the electronic computing device 26.

In particular, the component 18 may be an electronic component/assembly/product/module/packaging/printed circuit board.

Furthermore, as the first parameter 28a, 28b, a machine temperature and/or a machine current and/or a machine voltage are captured. As the second parameter 32a, 32b, a component temperature and/or an acceleration of the component 18 are captured. Furthermore, as the third parameter 34, a temperature of the surroundings 36 and/or a humidity in the surroundings 36 and/or a production noise in the surroundings 36 and/or a light value in the surroundings 36 and/or a magnetic field value in the surrounding 36 and/or an electric field value in the surroundings 36 are captured.

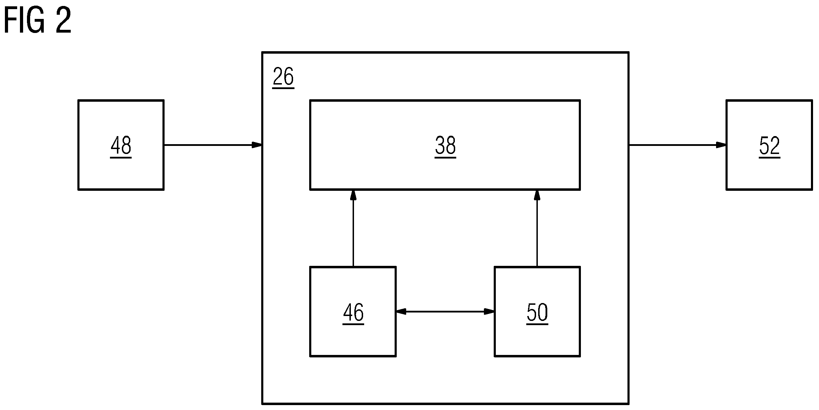

In particular, FIG 1 shows that based on the real, locally available data, for example the production machine 30a, 30b, the surroundings 36/the environment and/or the component 18/the product itself in the surroundings 36 of an in particular distributed manufacturing, an unambitious quality characterization becomes possible by introducing the new condition level value 12 of the component 18 to be manufactured, which predicts critical states, preventively avoids/reduces failures, downtimes or allows a quality-oriented continuous manufacturing by adaption and feedback of adjustable parameters. In order to realize this, an appropriately modularly expandable real-time capable sensor mesh 46 (FIG 2) is developed which processes and evaluates the state of individual areas/production machines 30a, 30b of the distributed electronics production and converts them together with freely available environmental data, for example temperature, humidity, acceleration, and operating noise, but also values for, for example, an ultra-violet radiation, the air quality, electric fields or B fields, into state image.

The evaluation of the state is thereby performed by the artificial intelligence 38, in particular with the method of federated learning, which allows to derive a current situation picture. From this comparison and the correlation of the elected data, a quality parameter, in particular the condition level value 12, is developed, which is intended to ensure both productivity and resilience, in one. This condition level value 12 is designed to be independent of the existing digital manufacturing infrastructure and thus serves as an independent data source for manufacturing optimization decisions. Via feedback loop, the artificial intelligence 38 is supposed to permanently learn and improve its decisions. The principle and a possible definition of the levels can be seen in FIG 1. With its help, a resilient strategy can be implemented, and manufacturing environments can be optimally controlled under all operating conditions.

FIG 2 shows a schematically flow chart according to the embodiment of the invention. In particular, with a block 48, a deterministic production is shown, for example working with a so-called manufacturing execution system (MES). This manufacturing execution system generates information about the status of the production as a combination of efficiency and capacity utilization and yield. This block 48 describes the process and defined action for an optimization of the production on the basis of experiences. The production shown in block 48 can be affected by local events/situations. With the new provided method, in particular with the use of the condition level value 12, an independent artificial intelligent base adaptive process optimization is provided. The artificial intelligence 38 derives information from the sensor mesh 46 as well as from a so-called dispedge-module 50 in order to get information about the quality of the production depending on the condition level value 12. The artificial intelligence 38 detects anomalies and determines countermeasures. The artificial intelligence 38 may be energy efficient provided on a RISC-V (Reduced Instruction Set Computers-five) hardware.

The sensor mesh 46 may comprise the first sensor device 20a, 20b, the second sensor device 22a, 22b, and the third sensor device 24. These sensors 20a, 20b, 22a, 22b, 24 may work wireless and autonomous.

The dispedge module 50 may coordinate the sensor mesh 46 and may analyze pre-worked data with federate learning. The dispedge module 50 may determine a local condition level value 12 as well as a global condition level value 12. With a block 52, a new production is provided, wherein the deterministic planning of the production process 14 is added by the condition level value 12. Therefore, unexpected events can be determined. Therefore, a dynamic reaction can be provided, which improves the efficiency as well as the capacity utilization and yield. An optimization of the production may be performed depending on the different condition level values 12 and anomalies in the manufacturing execution system is performed. Furthermore, an automation of the optimization can be implemented. Therefore, a resilient production with a high quality of production is provided.

## Claims

1. A method for determining a condition level value (12) for a production process (14) of a production line (16) for at least one component (18) by a monitoring system (10), comprising the steps of:
- capturing a first parameter (28a, 28b) of the production process (14) by a first sensor device (20a, 20b) of the monitoring system (10), wherein the first sensor device (20a, 20b) is arranged at at least one production machine (30a, 30b) of the production line (16), and wherein the first parameter (28a, 28b) is a value describing a parameter of the production machine (30a, 30b);
- capturing a second parameter (32a, 32b) of the component (18) during the production process (14) by a second sensor device (22a, 22b) of the monitoring system (10), wherein the second parameter (32a, 32b) is a value describing a parameter of the component (18);
- capturing a third parameter (34) of the surroundings (36) of the component (18) and/or the production machine (30a, 30b) during the production process (14) by a third sensor device (24) of the monitoring system (10), wherein the third parameter (24) is a value describing the surroundings (36); and
- determining the condition level value (12) depending on at least the first parameter (28a, 28b), the second parameter (32a, 32b) and the third parameter (34) by an electronic computing device (26) of the monitoring system (10).

2. A method according to claim 1, wherein the condition level value (12) is determined by an artificial intelligence (38) of the electronic computing device (26).

3. A method according to claim 2, wherein the artificial intelligence (38) is configured as a federated learning algorithm.

4. A method according to any of the claims 1 to 3, wherein the production process (14) is a distributed production process (14).

5. A method according to claim 4, wherein in each production step of the distributed production process (14) at least the first parameter (28a, 28b) and/or the second parameter (32a, 32b) and/or the third parameter (34) is captured.

6. A method according to claim 5, wherein each of the first parameter (28a, 28b) and/or each of the second parameter (32a, 32b) and/or each of the third parameter (34) are aggregated to the condition level value (12).

7. A method according to any of claims 1 to 6, wherein the component (18) is an electronic component/assembly/product/module/packaging/printed circuit board/printed circuit board.

8. A method according to any of claims 1 to 7, wherein as the first parameter (28a, 28b) a machine temperature and/or a machine current and/or a machine voltage are captured.

9. A method according to any of claims 1 to 8, wherein as the second parameter (32a, 32b) a component temperature and/or an acceleration of the component (18) are captured.

10. A method according to any of claims 1 to 9, wherein as the third parameter (34) a temperature of the surroundings (36) and/or a humidity in the surroundings (36) and/or a production noise in the surroundings (36) and/or a light value in the surroundings (36) and/or a magnetic field value in the surroundings (36) and/or an electric field value in the surroundings (36) are captured.

11. A method according to any of claims 1 to 10, wherein depending on the determined condition level value (12) a productivity of the production process (14) and/or a resilience of the production process (14) is determined.

12. A method according to any of claims 1 to 11, wherein depending on the determined condition level value (12) a countermeasure for affecting the condition level value (12) is determined and/or a device (44) for performing the countermeasure is controlled.

13. A computer program product comprising program code means for performing a method according to any of claims 1 to 12.

14. A computer-readable storage medium comprising at least the computer program product according to claim 13.

15. A monitoring system (10) for determining a condition level value (12) for a production process (14) of a production line (16) for at least one component (18), comprising at least a first sensor device (20a, 20b), a second sensor device (22a, 22b), a third sensor device (24) and an electronic computing device (26), wherein the monitoring system (10) is configured for performing a method according to any of claims 1 to 12.
